# DEMANDE DE BREVET EUROPEEN

(11) **EP 0 685 268 A1**
(43) Date de publication de la demande: **06.12.1995**
(21) Numéro de dépôt: 95410052.5
(22) Date de dépôt: 31.05.1995
(51) Int. Cl.: B05B 7/14, B65G 43/02, B65G 33/34

(54) **Dispositif de projection de produit de revêtement pulvérulent**

(30) Priorité: 01.06.1994 FR 9406679
(71) Demandeur: SAMES S.A., F-38243 Meylan Cédex (FR)
(72) Inventeur: Buquet, Thierry, F-38830 Saint Pierre d'Allevard (FR); Santarelli, Paul, F-69007 Lyon (FR); Ghio, Eric, F-68000 Grenoble (FR)
(74) Mandataire: Myon, Gérard Jean-Pierre

(57) **Abrégé**

Dispositif d'alimentation d'une installation de projection de produit pulvérulent, tel que par exemple un produit de revêtement en poudre, comprenant une vis sans fin (5) actionnée par un moteur (6), caractérisé en ce qu'il comprend des moyens (5a, 6a, 7a, 24) de limitation du couple transmis par ledit moteur à ladite vis sans fin. La vis sans fin (5) et/ou le fourreau (7) entourant partiellement la vis sans fin ont une surface réalisée dans un matériau ayant un faible coefficient de frottement avec le produit pulvérulent, ce qui évite d'échauffer la poudre par frottement. Le couple moteur est mesuré, et cette mesure permet de détecter les anomalies de fonctionnement et/ou de piloter le moteur d'entraînement (6).

## Description

L'invention concerne un dispositif d'alimentation d'une installation de projection de produit pulvérulent, tel que par exemple un produit de revêtement en poudre.

Dans de nombreuses applications industrielles, le produit pulvérulent, dénommé habituellement "poudre" est amené à partir d'un réservoir de produit jusqu'à son point d'utilisation, par exemple un projecteur du type pneumatique ou centrifuge. La poudre est entraînée grâce à un jet d'air dans un conduit de longueur importante, souvent tortueux et de relativement faible diamètre.

Il est essentiel que l'alimentation en poudre soit continue, homogène, stable pendant une période prolongée et réglable avec précision et rapidité. Dans ce but, on peut utiliser un dispositif d'aspiration du type à Venturi. On peut aussi utiliser une vis sans fin ou vis d'Archimède montée au bas d'une trémie, aboutissant à une tuyère alimentée en air d'entraînement par un injecteur. Un tel système présente des avantages par rapport à un dispositif d'aspiration de poudre, notamment en raison de la relative régularité du débit massique de poudre en dépit des pertes de charge variables. L'invention concerne un perfectionnement à un système de ce genre.

Les poudres utilisées sont généralement destinées à être cuites à environ 180°C après avoir été appliquées. Or, il a été noté que cette phase de cuisson fait jaunir certaines poudres. De nouvelles poudres ont été mises au point qui ne nécessitent plus qu'une cuisson à environ 140°C. Ceci permet de résoudre le problème du jaunissement mais introduit une contrainte supplémentaire car ces poudres s'altèrent rapidement à température ambiante. Elles doivent être stockées à des températures basses, de préférence comprises entre 5°C et 10°C. En outre, le point de polymérisation de ces poudres est bas et elles risquent de polymériser aux endroits du système d'alimentation où la température a tendance à être élevée, comme par exemple autour de la vis sans fin d'un système à entraînement mécanique, ou dans le fourreau entourant cette vis sans fin.

Un des avantages essentiels du revêtement avec un produit pulvérulent est que le produit qui n'a pas atteint la cible, c'est-à-dire l'objet à peindre, peut être recyclé grâce à un dispositif approprié de récupération de la poudre dans la cabine et à un dispositif de transport de cette poudre récupérée vers le dispositif d'alimentation en poudre de l'installation où elle est mélangée avec de la poudre neuve. Or, la poudre subit un échauffement lors de la projection; si sa température à la sortie du dispositif d'alimentation est trop élevée, elle risque donc de ne pas être récupérable. De plus, la poudre récupérée risque d'élever la température de la poudre neuve lors du mélange et ce, même si cette dernière a été stockée dans un réfrigérateur jusqu'au moment où elle est déversée dans le réservoir du système d'alimentation.

Or, le couple résultant du frottement entre la vis sans fin et la poudre d'une part, et entre le fourreau et la poudre d'autre part, est en majeure partie dissipé sous forme de chaleur, ce qui a tendance à augmenter la température de la poudre et par voie de conséquence, à la détériorer.

Il a été envisagé de refroidir la poudre lors de son trajet dans le système d'alimentation ou entre ce système et le projecteur associé. Cependant, la poudre est généralement réalisée à partir de résines organiques, par exemple époxyde, polyester, acrylique, polyuréthane, etc... Il s'agit d'un conducteur thermique médiocre qu'il est difficile de refroidir. L'élévation de température de la poudre induit donc une situation difficilement corrigible.

En outre, dans les systèmes de l'art antérieur,le couple transmis à la vis sans fin est susceptible de dérives incontrôlées. S'il augmente, il peut y avoir échauffement dangereux de la poudre. S'il diminue, le débit de poudre peut ne pas être suffisant. De plus, des phénomènes de désamorçage, (c'est-à-dire de fonctionnement à vide de la pompe par manque de poudre ou par fluidisation excessive de celle-ci), ou la formation de "bouchons" de poudre autour de la vis sans fin peuvent avoir lieu et ces systèmes doivent être en permanence surveillés par un opérateur pour éviter les incidents.

L'invention résout l'ensemble de ces problèmes.

Elle concerne un dispositif d'alimentation d'une installation de projection de produit pulvérulent, tel que par exemple un produit de revêtement en poudre, comprenant une vis sans fin actionnée par un moteur, caractérisé en ce qu'il comprend des moyens de limitation du couple transmis par ledit moteur à ladite vis sans fin.

Parmi les moyens de limitation de couple envisagés, on peut citer le choix de matériau et/ou l'état de surface de la vis sans fin et/ou du fourreau qui l'entoure sur une partie de sa longueur. On peut choisir le matériau et/ou traiter la surface de ces éléments pour que le coefficient de frottement entre la vis ou le fourreau et la poudre soit faible. Il peut s'agir de céramique ou de plastique. Grâce à l'invention, le couple fourni par le moteur d'entraînement de la vis sans fin est de l'ordre de 2 Nm alors qu'il serait de l'ordre de 9 Nm avec une vis sans fin en acier et/ou un fourreau en acier. Cette faible valeur évite l'échauffement de la poudre par frottement le long de la vis ou dans le fourreau.

Conformément à un autre aspect de l'invention, des moyens de limitation de couple peuvent comprendre des moyens de mesure du couple transmis par le moteur d'entraînement à la vis sans fin. Ces moyens permettent de piloter le moteur d'entraînement en fonction de la valeur mesurée du couple.

La mesure du couple contribue à la détection des anomalies de fonctionnement telles que la formation d'un bouchon de poudre autour de la vis qui risque de faire polymériser la poudre et/ou d'endommager le moteur d'entraînement, ou encore le désamorçage de la pompe, c'est-à-dire le fait que la vis sans fin n'entraîne plus la poudre. En effet, lorsqu'un bouchon de poudre se forme dans le fourreau de la vis sans fin, le couple résistant au mouvement du moteur augmente. Une forte augmentation du couple moteur signifie donc une anomalie. De même, une forte diminution du couple signifie soit que la vis sans fin n'est plus alimentée en poudre, soit qu'une cavité s'est formée dans le fourreau entourant la vis sans fin et que la poudre n'est plus en contact avec la vis sans fin. Ces variations de couple sont d'autant plus faciles à détecter que la valeur nominale de ce couple est faible car leur valeur relative par rapport à la valeur nominale est d'autant plus forte.

Les moyens de mesure du couple peuvent donc être associés à un équipement de sécurité, pour piloter l'arrêt de l'installation et/ou déclencher une alarme si le couple mesuré augmente au-delà d'une valeur maximum prédéterminée (formation d'un bouchon) ou au contraire si le couple mesuré diminue en deçà d'une valeur minimum précédente (désamorçage).

Eventuellement, entre ces deux limites, on peut mettre à profit la mesure du couple pour réaliser un asservissement du moteur, plus particulièrement un asservissement de sa vitesse, en fonction du couple. L'asservissement serait par exemple tel qu'une augmentation de coupe (dans le conditions normales de fonctionnement) se traduise par une diminution de la vitesse du moteur et qu'une diminution de couple se traduise par une augmentation de la vitesse.

Bien entendu, tous les moyens de limitation de couple envisagés ci-dessus: réduction des frottement au niveau de la vis sans fin, détermination de limites de couples acceptables et asservissement en fonction du couple peuvent être mis en oeuvre indépendamment ou en combinaison.

Enfin, grâce à l'invention, l'énergie nécessaire au fonctionnement du moteur d'entraînement est minimale: elle est faible grâce au faible coefficient de frottement des pièces en contact avec la poudre et elle est en permanence maintenue à sa valeur optimale grâce à l'asservissement du moteur d'entraînement.

L'invention sera mieux comprise et d'autres avantages de celle-ci apparaîtront plus clairement à la lumière de la description qui va suivre d'un mode de réalisation d'un dispositif d'alimentation d'une installation de projection de produit pulvérulent conforme à son principe donnée uniquement à titre d'exemple et faite en référence aux dessins annexés dans lesquels
- la figure 1 est une vue schématique d'un dispositif selon l'invention; et
- la figure 2 est une section à plus grande échelle de la vis sans fin et du fourreau d'une variante de l'invention.

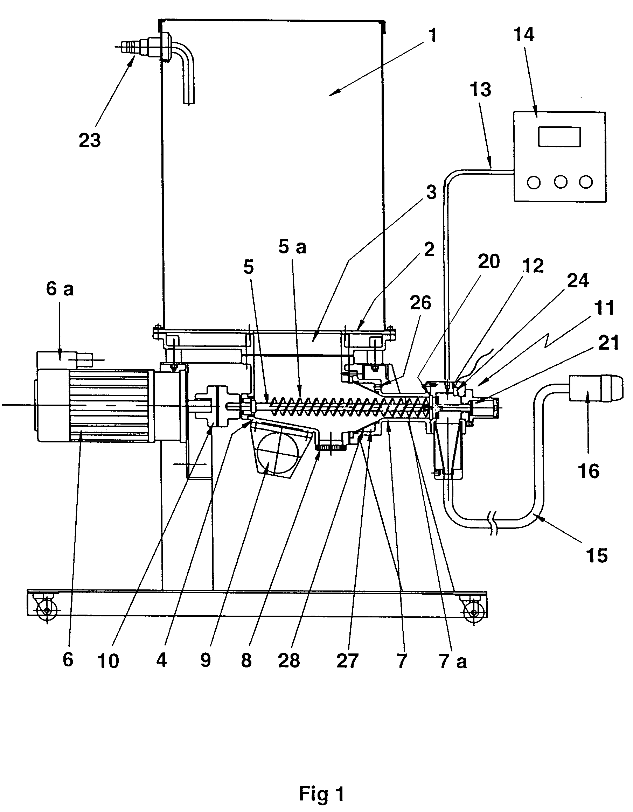

Le dispositif de la figure 1 comprend un réservoir 1 de poudre fluidisée dont le fond est constitué par une plaque poreuse 2 au travers de laquelle un gaz tel que de l'air est injecté pour fluidiser la poudre et l'entraîner vers une ouverture 3. Cette dernière est pratiquée dans le fond du réservoir 1 et se prolonge par un corps 4 formant trémie dans lequel est installée une vis sans fin 5 entraînée par un moteur 6. Une extrémité du corps 4 du côté aval de la vis sans fin 5 forme un fourreau 7 entourant partiellement la vis sans fin. Le corps 4 comporte, dans sa partie inférieure, une ouverture de vidange obturée par un bouchon amovible 8. Un vibreur 9 est monté sur le corps 4, à l'extérieur de celui-ci. Pendant les phases d'utilisation du dispositif, l'ensemble constitué par le réservoir 1 et le corps 4 est ainsi mis en vibration. Pour éviter que la chaleur due au fonctionnement du moteur ne soit transmise à la vis sans fin 5, un joint thermique 10 formant coupleur mécanique est placé entre le moteur 6 et la vis sans fin 5.

Le dispositif comprend aussi une tuyère d'entraînement 11 connectée à la sortie du fourreau 7 et comportant un injecteur 12 alimenté en air par un conduit d'alimentation d'air comprimé 13 relié à un tableau de commande 14. La source d'air comprimé et éventuellement le détendeur nécessaire ne sont pas représentés. La sortie de la tuyère 11 est connectée à un conduit souple 15 alimentant en poudre un projecteur électrostatique 16, par exemple automatique. Sur le trajet de la poudre, entre la vis sans fin 4 et la tuyère 11 est disposé un clapet anti-retour 20, commandé grâce à un vérin 21 pneumatiquement à double effet. La poudre récupérée dans la cabine (non représentée) de l'installation et destinée à être recyclée est retournée au dispositif d'alimentation par un conduit dont l'arrivée 23 débouche à la partie supérieure du réservoir 1.

Le moteur 6 est un moteur à courant continu ou un moteur à caractéristique équivalente, c'est-à-dire un moteur consommant un courant proportionnel au couple qu'il fournit, ce qui permet de mesurer facilement le couple fourni grâce à une cellule de mesure et de commande 6a. Une boucle d'asservissement peut aussi être incluse dans la cellule 6a pour maintenir le couple fourni égal à une valeur de consigne. Une variation importante correspondant à une augmentation de couple signifie en général la formation d'un bouchon de poudre dans lequel la poudre peut s'échauffer, voire même polymériser. Une variation correspondant à une diminution de couple signifie le désamorçage de la pompe, par exemple par formation d'une cavité autour de la vis sans fin 5. En cas de variation anormale du couple, des actions correctives, le déclenchement d'une alarme ou la mise hors service du dispositif peuvent être prévus.

Selon une variante de l'invention, les moyens de mesure du couple peuvent comprendre un capteur de pression 24 placé à l'entrée de la tuyère 11. La pression dans la tuyère 11 est liée au couple transmis à la vis sans fin 5 par une relation univoque: elle croît avec ce couple. En cas d'obturation du conduit 15, la pression dans la tuyère 11 augmente et le couple nécessaire à la rotation de la vis sans fin 5 qui pousse la poudre dans cette tuyère augmente aussi. De même, en cas de désamorçage de la vis sans fin 5, la pression dans la tuyère 11 devient égale à la pression dans le réservoir 1, c'est-à-dire proche de la pression atmosphérique. Le capteur de pression permet donc de savoir quand le couple transmis à la vis 5 sort d'une plage de fonctionnement acceptable. Après calibrage adéquat, il peut aussi permettre de connaître, en permanence pendant les phases de fonctionnement du dispositif, la valeur du couple transmis par le moteur 6 à la vis sans fin 5. Il peut être relié à la cellule de commande 6a pour piloter le moteur 6. Dans ce cas, le moteur 6 peut être de n'importe quel type.

Selon une autre variante de l'invention non représentée, un couple-mètre peut être installé sur l'arbre reliant le moteur 6 à la vis sans fin 5, par exemple à proximité du joint thermique 10. Comme précédemment, il peut être relié à la cellule 6a pour piloter le moteur 6 d'un type quelconque.

Conformément à l'invention, la surface 5a de la vis sans fin 5 est réalisée dans un matériau ayant un faible coefficient de frottement avec la poudre. Il peut s'agir d'une céramique ou d'un matériau plastique, tel que par exemple du polytetrafluoroéthylène (PTFE), du polyethylène ou du polyestertéréphtalate (PETP). D'autres matériaux avec des caractéristiques tribologiques équivalentes peuvent aussi être utilisés sans sortir du cadre de l'invention. La surface interne 7a du fourreau 7 peut aussi être réalisée avec un matériau du même type.

Le couple nécessaire pour entraîner la vis sans fin 5 en rotation et transporter le produit de revêtement pulvérulent est faible; la chaleur dissipée dans la poudre au niveau de la vis 5 et du fourreau 7 est donc limitée, ce qui évite l'élévation de température de la poudre et sa détérioration.

Le fourreau 7 est muni d'évents 26 répartis autour de la vis sans fin et mettant en communication avec l'atmosphère ambiante une chambre circulaire 27 située dans le corps 4 à l'entrée du fourreau 7 et séparée de la poudre pénétrant dans le fourreau par une plaque poreuse 28. Cet agencement permet à une partie de l'air prisonnier de la poudre d'être évacué vers l'atmosphère ambiante après avoir servi à fluidiser la poudre dans la première partie du transport. Les évents 26 sont prévus en nombre suffisant pour que la somme de leurs sections permette de maintenir la pression dans cette chambre 27 proche de la pression atmosphérique. Ceci permet de compacter la poudre dans le fourreau 7 sans danger que la vis 5 ne "patine" dans un mélange trop fluide. On a montré expérimentalement qu'en l'absence de tels évents 26 les pressions du mélange pulvérulent de part et d'autre du fourreau 7 s'équilibrent. Il n'est alors pas possible de transporter la poudre avec la vis sans fin; celle-ci tourne dans le mélange sans l'entraîner. Le couple transmis à la vis sans fin est alors très faible et sa valeur sort des limites acceptables.

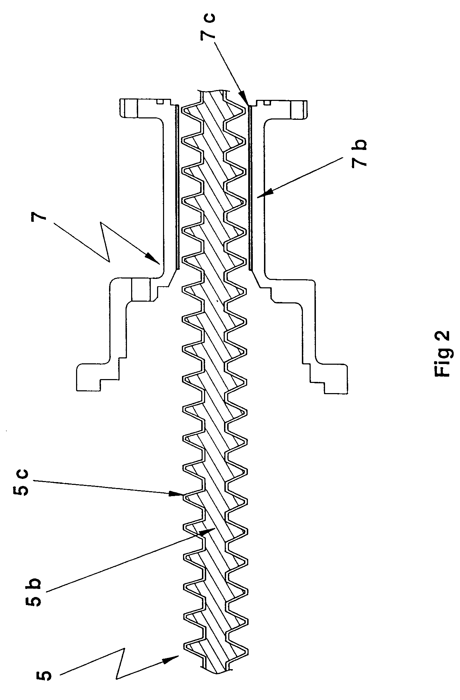

La vis sans fin 5 et le fourreau 7 représentés à la figure 1 sont réalisé dans un matériau unique, c'est-à-dire obtenus par usinage ou tout moyen approprié d'une pièce de la matière choisie pour obtenir l'état souhaité des surfaces 5a et 7a. Selon la variante de l'invention représentée à la figure 2, la vis 5 et/ou le fourreau 7 peuvent avoir une armature respectivement 5b et 7b dans un matériau choisi pour ses qualités mécaniques, tel que par exemple un acier, recouverte d'une couche 5c de matériau à faible coefficient de frottement dans le cas de la vis 5 ou muni d'une chemise 7c en un tel matériau dans le cas du fourreau 7. La couche 5c peut être déposée par traitement de surface sur l'armature 5b. Cette variante est particulièrement avantageuse dans le cas de l'utilisation d'une céramique, qui peut être peu résiliente, ou du polytétrafluoroéthylène, qui flue sous de faibles contraintes et peut être endommagé par une poudre abrasive, pour réaliser les couches 5c et/ou 7c avec un faible coefficient de frottement.

## Revendications

**1°-** Dispositif d'alimentation d'une installation de projection de produit pulvérulent, tel que par exemple un produit de revêtement en poudre, comprenant une vis sans fin (5) actionnée par un moteur (6), caractérisé en ce qu'il comprend des moyens (5a, 5c, 6a, 7a, 7c, 24, 26) de limitation du couple transmis par ledit moteur à ladite vis sans fin.

**2°-** Dispositif selon la revendication 1, caractérisé en ce que la surface (5a, 5c) de ladite vis sans fin (5) est réalisée dans un matériau ayant un faible coefficient de frottement avec ledit produit pulvérulent.

**3°-** Dispositif selon la revendication 2, comprenant un fourreau (7) entourant au moins partiellement ladite vis sans fin (5), caractérisé en ce que la surface interne (7a, 7c) dudit fourreau est réalisée dans un matériau ayant un faible coefficient de frottement avec ledit produit pulvérulent.

**4°-** Dispositif selon la revendication 2, caractérisé en ce qu'au moins l'une des surfaces (5a, 5c, 7a, 7c) de ladite vis sans fin (5) ou dudit fourreau (7) est en céramique ou en matériau plastique.

**5°-** Dispositif selon la revendication 4, caractérisé en ce qu'une telle surface (5a, 5c, 7a, 7c) est en polytétrafluoroéthylène, en polyestertéréphtalate ou en polyéthylène.

**6°-** Dispositif selon l'une des revendications 3 à 5, caractérisé en ce que ledit organe (5) ou ledit fourreau (7) est constitué d'un matériau unique.

**7°-** Dispositif selon l'une des revendications 3 à 5, caractérisé en ce que ledit organe (5) ou ledit fourreau (7) est constitué d'une armature (5b, 7b) recouverte d'une couche (5c, 7c) de matériau à faible coefficient de frottement.

**8°-** Dispositif selon la revendication 1 comprenant un fourreau (7) entourant au moins partiellement ladite vis sans fin (5), caractérisé en ce que ledit fourreau comporte au moins un trou d'évent (26) d'une fraction de l'air contenu dans le produit pulvérulent.

**9°-** Dispositif selon la revendication 8, caractérisé en ce que ledit trou d'évent (26) met en communication avec l'atmosphère ambiante une chambre (27) située à l'intérieur d'un corps (4) formant trémie, ladite chambre étant séparée du produit pulvérulent par une plaque poreuse (28).

**10°-** Dispositif selon la revendication 1, caractérisé en ce qu'il est muni de moyens (6a,24) de mesure du couple transmis à ladite vis sans fin, lesdits moyens pilotant ledit moteur (6).

**11°-** Dispositif selon la revendication 10, caractérisé en ce que ledit moteur (6) est un moteur électrique à courant continu ou un moteur à caractéristique équivalente et en ce que lesdits moyens de mesure (6a) sont aptes à mesurer le courant consommé par ledit moteur.

**12°-** Dispositif selon la revendication 10, caractérisé en ce que lesdits moyens de mesure comprennent un capteur de pression (24) apte à mesurer la pression dans une tuyère d'entraînement (11) située en aval de ladite vis sans fin (5) sur le trajet dudit produit pulvérulent.

**13°-** Dispositif selon la revendication 10, caractérisé en ce que lesdits moyens de mesure comprennent un couple-mètre situé sur l'axe de la vis sans fin (5).
